# EUROPEAN PATENT APPLICATION

(11) **EP 3 708 233 A1**
(43) Date of publication of application: **16.09.2020**
(21) Application number: 19215793.1
(22) Date of filing: 12.12.2019
(51) Int. Cl.: B01D 29/11, B01D 35/30

(54) **COVER FOR OIL FILTER HOUSING OF AN INTEGRATED DRIVE GENERATOR**

(30) Priority: 11.03.2019 US 201916298628
(71) Applicant: Hamilton Sundstrand Corporation, Charlotte, NC 28217-4578 (US)
(72) Inventor: LEMMERS, Glenn C. Jr., Loves Park, IL Illinois 61111 (US); HOCHSTETLER, Derek R., Rockford, IL Illinois 61101 (US)
(74) Representative: Dehns

(57) **Abstract**

A cover (14) for an oil filter housing (18) is disclosed comprising an elongated body (20) defining an upper end portion (22) and an lower end portion (2), and having a central axis extending therethrough, which delineates an axial length of the body, wherein an axial bore (30) extends through the body of the cover from the lower end portion thereof to an interior end wall in the upper end portion thereof for accommodating an axial portion of an oil filter located within the housing, the axial bore of the body having an axial length that is about 90% to about 94% of the axial length of the body.

## Description

### BACKGROUND OF THE INVENTION

### 1. Field of the Invention

The subject invention is directed to an oil filter cover, and more particularly, to a removable cover for an oil filter housing of an Integrated Drive Generator (IDG) coupled to a gas turbine engine.

### 2. Description of Related Art

Aircraft currently rely upon electrical, pneumatic and hydraulic systems for secondary power generation. A typical electrical system in an aircraft utilizes an IDG coupled to a gas turbine engine to provide fixed frequency power to the power distribution system and to a variety of loads.

An exemplary IDG includes a generator, a hydraulic unit and a differential assembly arranged in a common housing. The differential assembly is coupled to a gas turbine engine by way of an input shaft. The rotational speed of the input shaft varies during the operation of the gas turbine engine. The hydraulic unit cooperates with the differential assembly to provide a constant speed to the generator throughout the operating range of the engine.

IDGs operate at elevated temperatures. Synthetic oils are used for cooling and lubrication in IDGs, and as a working fluid. In these systems, tiny metallic wear particulates are formed from normal operation. These wear particles are carried by the oil within an oil circuit, and must be removed to maintain the working efficiency and life of the system.

For this reason, the oil circuit includes an oil filter located in a housing having an external cover that facilitates installation, removal and periodic replacement of the oil filter. It is desirable to design oil filters to optimize the dirt holdincapacity and operational life of the filter. This is typically done by increasing the amount of filter media within the fixed dimensions of the filter cartridge, since the housing that supports the cartridge has dimensions that are immutable due to spatial constraints, especially in the case of an IDG coupled to a gas turbine engine on an aircraft.

However, as the amount of filter media within the cartridge is reduced, the pressure drop through the filter cartridge also increases, impacting the efficiency of the system. It would be beneficial therefore, to maximize the amount of filter media in the oil filter without increasing the pressure drop through the filter cartridge. The subject invention provides a solution by way of a uniquely configured cover for the oil filter housing, which is designed to accommodate a filter cartridge that has a greater axial length than the filter housing within which it is accommodated, while remaining within the spatial constraints that permit ready access to and removal of the cover and filter from the housing for routine maintenance purposes.

### SUMMARY OF THE DISCLOSURE

The subject invention is directed to a new and useful cover for an oil filter housing for use with an Integrated Drive Generator (IDG) coupled to a gas turbine engine. The cover includes an elongated body defining an upper end portion and a lower end portion, and it has a central axis extending therethrough, which delineates an axial length of the body. An axial bore extends through the body of the cover from the lower end portion thereof to an interior end wall in the upper end portion thereof for accommodating an axial end portion of an oil filter located within the housing.

In accordance with a preferred embodiment of the subject invention, the axial bore of the body has an axial length that is greater than 85% of the axial length of the body. More preferably, the axial length of the bore is about 90% to about 94% of the axial length of the body. In an exemplary embodiment of the cover, the axial length of the bore is about 1.57 inches to about 1.58 inches, and the axial length of the body is about 1.67 inches to about 1.70 inches.

Furthermore, the axial bore has a diameter of about 1.81 inches, and the body is formed from 2024 aluminum alloy and the upper end portion of the body has a hexagonal engagement surface formed thereon for installing the cover on the housing and for removing the cover from the housing.

These and other features of the filter housing cover of the subject invention will become more readily apparent to those having ordinary skill in the art to which the subject invention appertains from the detailed description of the preferred embodiments taken in conjunction with the following brief description of the drawings.

### BRIEF DESCRIPTION OF THE DRAWINGS

So that those having ordinary skill in the art will readily understand how to make and use the subject invention without undue experimentation, preferred embodiments thereof will be described in detail herein below with reference to the figures wherein:
Fig. 1 is an illustration of an Integrated Drive Generator (IDG) coupled to a gas turbine engine and having an oil filter housing that includes the cover of the subject invention;
Fig. 2 is a perspective view of the cover of the subject invention and the elongated oil filter cartridge removed from the filter housing of the IDG;
Fig. 3 is a side elevational view of the perspective view of the cover shown in Figs. 1 and 2;
Fig. 4 is a top plan view of the cover;
Fig. 5 is a cross-sectional view of the cover taken along line 5-5 of Fig. 4;
Fig. 6 is an enlarged localized view of a medial flange portion of the cover taken from Fig. 3; and
Fig. 7 is an enlarged localized cross-sectional view taken along line 7-7 of Fig. 1 illustrating the elongated oil filter within the housing enclosed by the cover of the subject invention, and showing the path of fluid flow through the oil filter.

### DETAILED DESCRIPTION OF THE PREFERRED EMBODIMENTS

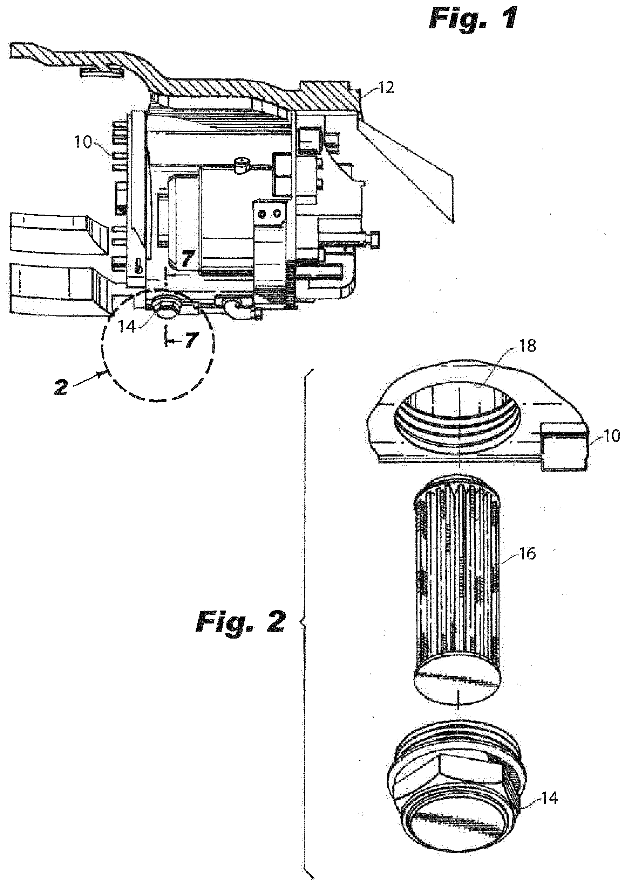

Referring now to the drawings wherein like reference numerals identify similar structural features, there is illustrated in Fig. 1 an Integrated Drive Generator (IDG) 10 coupled to a gas turbine engine 12 that employs the new and useful cover 14 of the subject invention. More particularly, as shown in Fig. 2, the cover 14 is designed to accommodate an elongated radially pleated oil filter cartridge 16 that has a greater axial length than the filter housing 18 within which it is accommodated, while remaining within the spatial constraints that permit ready access to and removal of the cover 14 and oil filter cartridge 16 from the housing 18 of the IDG 10 for routine maintenance purposes.

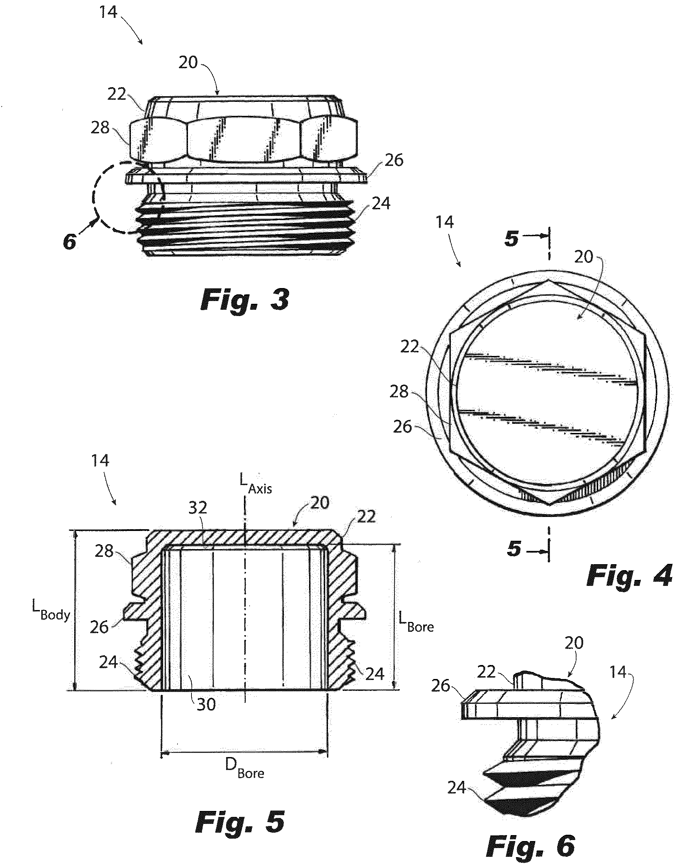

Referring to Figs. 3 through 6, the cover 14 includes an elongated body 20 defining a central longitudinal axis (L_{Axis}) and having an upper end portion 22, a lower end portion 24 and a medial abutment flange 26 that surrounds the periphery of the body 20. The body 20 of cover 14 is preferably formed from 2024 aluminum alloy or a similar material.

The central longitudinal axis L_{Axis} of the body 20 delineates an axial length (L_{Body}) of the body 20. More particularly, as shown in Fig. 5, the axial length L_{Body} of the body 20 of cover 14 is about 1.69 inches to about 1.72 inches. As best seen in Fig. 4, the upper end portion 22 of the body 20 of cover 14 has a hexagonal engagement surface 28 formed thereon for installing the cover 14 on the housing 18 and for removing the cover 14 from the housing 18 using a hand tool.

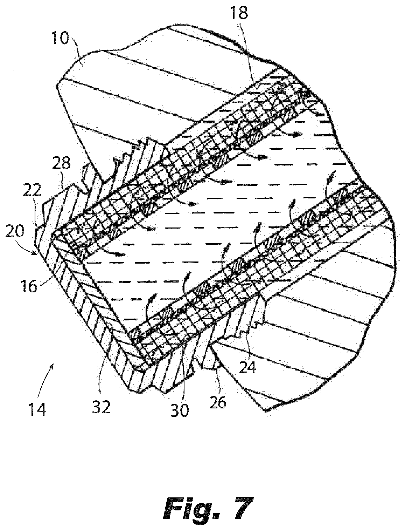

The lower end portion 24 of the body 20 of cover 14 has a helical thread formation with a standard pitch for threadably engaging the housing 18, as best seen in Fig. 3. The medial abutment flange 26 of the body 20 of cover 14 is best seen in Fig. 6. It is adapted and configured to abut against the outer edge surface of the filter housing 18 of the IDG 10 when the cover 14 is threadably engaged to the housing 18, as best seen in Fig. 7

Referring to Fig. 5, the body 20 of the cover 14 has axial bore 30 that extends through the body 20 from the lower end portion 24 to an interior end wall 32 in the upper end portion 22 for accommodating an axial end portion of the oil filter cartridge 16 located within the housing 14. The axial bore 30 of body 20 has an axial length (L_{Bore}) of and an inner diameter DBore. The axial length L_{Bore} of the bore 30 is about 1.57 inches to about 1.58 inches and the inner diameter D_{Bore} of the bore 30 is about 1.81 inches.

In accordance with a preferred embodiment of the subject invention, the axial length L_{Bore} of the bore 30 of body 20 is greater than 85% of the axial length L_{Body} of the body 20. More preferably, the axial length L_{Bore} of the bore 30 of body 20 is about 90% to about 94% of the axial length L_{Body} of the body 20. In sum, in an exemplary embodiment of the cover 14, the axial length L_{Bore} of the bore 30 of body 20 is about 1.56 inches to about 1.59 inches, and the axial length L_{Body} of the body 20 is about 1.69 inches to about 1.72 inches.

Referring now to Fig. 7, when the oil filter 16 is installed in the housing 18 of the IDG 10, the end portion of the oil filter 16 advantageously fits within the axial bore 30 of the body 20 of the cover 14. Moreover, when the end portion of the oil filter 16 is within the axial bore 30 of the body 20 of cover 14, it extends beyond the housing 18, within the cover 14. This enables the oil filter 16 to have a greater axial length than the filter housing 18 within which it is accommodated. As a result, the dirt holding capacity and operational life of the oil filter 16 can be optimized, while the cover 14 remains within the spatial constraints that permit ready access to and removal of the cover 14 and oil filter 16 from the housing 18 of IDG 10 for routine maintenance purposes.

While the subject disclosure has been shown and described with reference to preferred embodiments, those skilled in the art will readily appreciate that changes and/or modifications may be made thereto without departing from the scope of the subject disclosure.

## Claims

1. A cover (14) for an oil filter housing (18), comprising:
an elongated body (20) defining an upper end portion (22) and an lower end portion (24), and having a central axis extending therethrough, which delineates an axial length of the body, wherein an axial bore (30) extends through the body of the cover from the lower end portion thereof to an interior end wall in the upper end portion thereof for accommodating an axial end portion of an oil filter located within the housing, the axial bore of the body having an axial length that is greater than 85% of the axial length of the body.

2. A cover as recited in Claim 1, wherein the axial length of the bore is about 90% to about 94% of the axial length of the body

3. A cover as recited in Claim 1 or 2, wherein the axial length of the bore is about 1.56 inches to about 1.59 inches

4. A cover as recited in any preceding Claim, wherein the axial length of the body is about 1.69 inches to about 1.72 inches.

5. A cover as recited in any preceding Claim, wherein the axial bore has a diameter of about 1.81 inches.

6. A cover as recited in any preceding Claim, wherein the body is formed from 2024 aluminum alloy.

7. A cover as recited in any preceding Claim, wherein the upper end portion of the body has a hexagonal engagement surface formed thereon.

8. A cover (14) for an oil filter housing (18), comprising:
an elongated body (20) defining an upper end portion and an lower end portion, and having a central axis extending therethrough, which delineates an axial length of the body, wherein an axial bore extends through the body of the cover from the lower end portion thereof to an interior end wall in the upper end portion thereof for accommodating an axial portion of an oil filter located within the housing, the axial bore of the body having an axial length that is about 90% to about 94% of the axial length of the body.

9. A cover as recited in Claim 8, wherein the axial length of the bore is about 1.56 inches to about 1.59 inches

10. A cover as recited in Claim 8 or 9, wherein the axial length of the body is about 1.69 inches to about 1.72 inches.

11. A cover as recited in any of claims 8 to 10, wherein the axial bore has a diameter of about 1.81 inches.

12. A cover as recited in any of claims 8 to 11, wherein the body is formed from 2024 aluminum alloy.

13. A cover as recited in any of claims 8 to 12, wherein the upper end portion of the body has a hexagonal engagement surface formed thereon.

14. A cover for an oil filter housing, comprising:
an elongated body formed from an aluminum alloy and defining an upper end portion and an lower end portion, and having a central axis extending therethrough, wherein an axial bore extends through the body of the cover from the lower end portion thereof to an interior end wall in the upper end portion thereof for accommodating an axial portion of an oil filter located within the housing, the body having an axial length of about 1.69 inches to about 1.72 inches, and the axial bore having an axial length of about 1.56 inches to about 1.59 inches and a diameter of about 1.81 inches.

15. A cover as recited in Claim 14, wherein the body is formed from 2024 aluminum alloy.
